# EUROPEAN PATENT APPLICATION

(11) **EP 4 708 567 A1**
(43) Date of publication of application: **11.03.2026**
(21) Application number: 24797462.9
(22) Date of filing: 26.04.2024
(51) Int. Cl.: H01Q 3/02, H01Q 21/00, H02K 7/116, F16H 19/04

(54) **PHASE SHIFTER**

(30) Priority: 27.04.2023 KR 20230055220
(71) Applicant: KMW Inc., Hwaseong-si, Gyeonggi-do 18462 (KR)
(72) Inventor: SEO, Yong Won, Hwaseong-si Gyeonggi-do 18442 (KR); KIM, Myung Hwa, Hwaseong-si Gyeonggi-do 18462 (KR); PARK, Jang Soon, Hwaseong-si Gyeonggi-do 18463 (KR); KANG, Seong Man, Hwaseong-Si Gyeonggi-do 18430 (KR); SHIN, Dong Hee, Incheon 21393 (KR)
(74) Representative: impuls legal PartG mbB
(86) International application number: PCT/KR2024/005670
(87) International publication number: WO 2024/225808

(57) **Abstract**

According to an embodiment of the present disclosure, provided is a phase shifter comprising: at least one base portion extending in a longitudinal direction and configured such that a first circuit pattern is formed on one surface thereof; a pair of ground walls respectively extending from both opposing transverse sides of each of the at least one base portion in a direction parallel to a height direction perpendicular to the at least one base portion; a pair of pattern walls disposed to protrude from one surface of each of the at least one base portion in a direction parallel to the height direction, wherein a second circuit pattern electrically connected to the first circuit pattern is formed on at least one surface of each of the pair of pattern walls; and a pair of dielectrics configured to be movable in a direction parallel to the longitudinal direction, wherein at least a portion of each of the pair of dielectrics is disposed between each of the pair of ground walls and each of the pair of pattern walls.

## Description

### [Technical Field]

The present disclosure relates to a phase shifter.

### [Background Art]

The contents as described in this section merely provides background information on the present disclosure and does not constitute the prior art.

In an antenna device, forming a beam in a horizontal direction is most efficient in terms of coverage, but in some cases, the beam angle needs to be adjusted in a vertical direction for reasons such as interference or loss. In this case, the beam angle of the antenna device in the vertical direction is adjusted through a mechanical beam tilt scheme or an electrical beam tilt scheme.

The mechanical beam tilt scheme is a scheme of adjusting a beam angle by directly installing an antenna device so as to be inclined downwardly. Although this scheme is a simple scheme, this scheme is somewhat cumbersome for various reasons, such as a worker's on-site visit and power cut-off during work.

The electric beam tilt scheme is a scheme based on a multi-line phase shifter (MLPS). Specifically, in the electric beam tilt scheme, a beam angle is adjusted by feeding signals having different phases to a plurality of vertically arranged radiation elements.

In order to implement the electric beam tilting scheme, a phase shifter may be provided in the antenna device. The phase shifter appropriately delays an input signal to generate a phase difference between the input signal and the output signal. In this regard, the delay of the input signal may be implemented by changing a length of the transmission line or changing a signal transmission speed in the transmission line.

Meanwhile, recently, as a base station or a relay of a mobile communication system, a multi-band frequency antenna device capable of serving various bands has been widely used. The multi-band antenna device needs to individually adjust phases of several band frequencies. Accordingly, the number of phase shifters provided in the antenna device may be increased, and accordingly, the phase shifter needs to be further reduced in size and lightweight.

In this situation, when a dielectric structure is placed on a pattern on a printed circuit board (PCB) as in the related art, a dielectric constant thereof becomes very high. For this reason, a material such as a ceramic material is additionally disposed, which has a problem of increasing an overall unit cost and weight of the phase shifter.

### [Disclosure]

### [Technical Problem]

Accordingly, the present disclosure is to solve these problems, and a main purpose of the present disclosure is to provide a phase shifter in which an influence of a dielectric structure on an antenna element is minimized and an advantage in terms of a process is achieved by sufficiently utilizing a ground surface of the antenna element so that the antenna element and the dielectric structure are spaced away from each other.

### [Technical Solution]

According to one embodiment of the present disclosure, the present disclosure provides a phase shifter comprising: at least one base portion extending in a longitudinal direction and configured such that a first circuit pattern is formed on one surface thereof; a pair of ground walls respectively extending from both opposing transverse sides of each of the at least one base portion in a direction parallel to a height direction perpendicular to the at least one base portion; a pair of pattern walls disposed to protrude from one surface of each of the at least one base portion in a direction parallel to the height direction, wherein a second circuit pattern electrically connected to the first circuit pattern is formed on at least one surface of each of the pair of pattern walls; and a pair of dielectrics configured to be movable in a direction parallel to the longitudinal direction, wherein at least a portion of each of the pair of dielectrics is disposed between each of the pair of ground walls and each of the pair of pattern walls.

### [Advantageous Effects]

As described above, according to the present embodiment, the antenna element and the dielectric structure are spaced away from each other by fully utilizing the ground surface of the antenna element, thereby minimizing the influence of the dielectric structure on the antenna element and achieving an advantage in terms of the process.

### [Description of Drawings]

FIG. 1 is an assembled perspective view and an enlarged view of some components of a phase shifter according to an embodiment of the present disclosure.
FIG. 2 is an exploded perspective view of a portion of a phase shifter according to an embodiment of the present disclosure.
FIG. 3 is a cross-sectional view of the phase shifter of FIG. 1 taken along a A-A' direction.
FIG. 4 is a cross-sectional view of the phase shifter of FIG. 1 taken along a B-B' direction.

### [Mode for Invention]

Hereinafter, some embodiments of the present disclosure will be described in detail with reference to the accompanying drawings. It is to be noted that in giving reference numerals to components of each of the accompanying drawings, the same components will be denoted by the same reference numerals even though they are illustrated in different drawings. Further, in describing exemplary embodiments of the present invention, well-known functions or constructions will not be described in detail since they may unnecessarily obscure the understanding of the present invention.

Terms 'first', 'second', i), ii), a), b), and the like, will be used in describing components according to embodiments of the present disclosure. These terms are only for distinguishing the components from other components, and the nature, sequence, order, or the like of the components are not limited by the terms. Throughout the present specification, unless explicitly described to the contrary, "including" or "comprising" any components will be understood to imply the inclusion of other elements rather than the exclusion of any other elements.

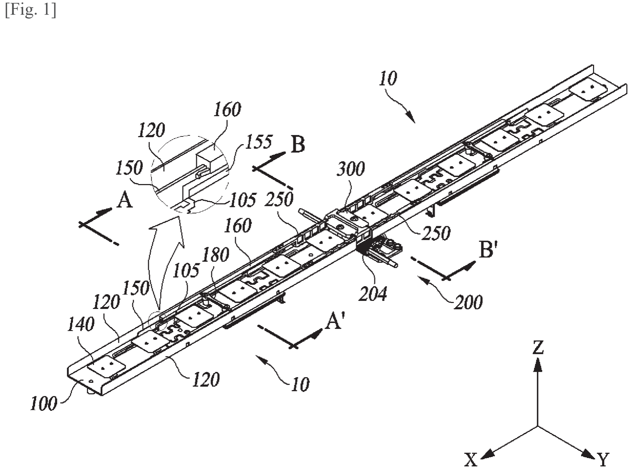

FIG. 1 is an assembled perspective view and an enlarged view of some components of a phase shifter according to an embodiment of the disclosure.

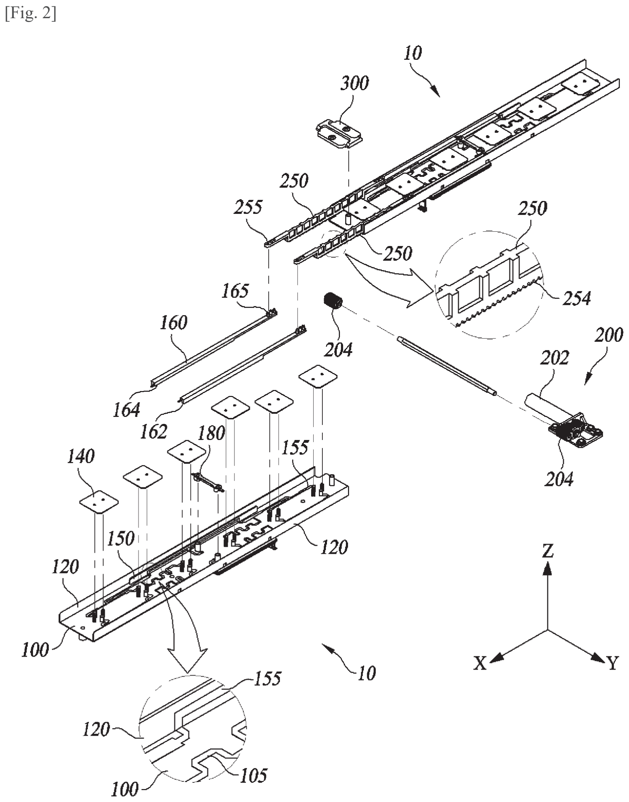

FIG. 2 is an exploded perspective view of a portion of a phase shifter according to an embodiment of the present disclosure.

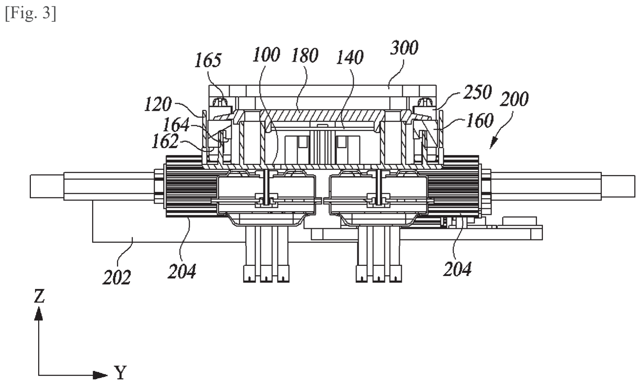

FIG. 3 is a cross-sectional view of the phase shifter of FIG. 1 taken along the A-A' direction.

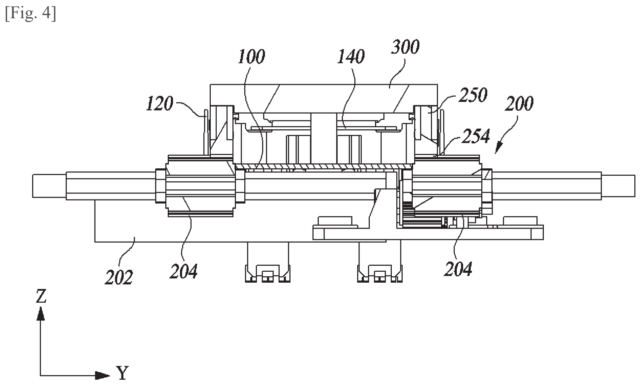

FIG. 4 is a cross-sectional view of the phase shifter of FIG. 1 taken along the B-B' direction.

Referring to FIGS. 1 to 4, a phase shifter 10 according to an embodiment of the disclosure includes all or some of at least one base portion 100, a pair of ground walls 120, at least one radiation element 140, a pair of pattern walls 150, a pair of dielectrics 160, at least one disengagement prevention unit 180, a drive unit 200, and a pair of guide units 250.

The at least one base portion 100 extends in a longitudinal direction, and is configured such that a first circuit pattern 105 is formed on one surface thereof. In this regard, the longitudinal direction may mean, for example, a direction parallel to the X-axis in FIGS. 1 and 2.

The first circuit pattern 105 may be connected to at least one input port (not shown) and a plurality of output ports (not shown). In addition, the first circuit pattern 105 may receive an antenna signal from an antenna cable and provide a movement path of the antenna signal.

FIG. 2 illustrates an example in which the first circuit pattern 105 is formed on one surface of the at least one base portion 100, but the shape of the first circuit pattern 105 is not necessarily limited to that illustrated in FIG. 2.

In addition, in FIGS. 1 and 2, the at least one base portion 100 is illustrated as including two base portions 100 spaced apart from each other in the longitudinal direction, but the at least one base portion 100 may be configured to include one base portion or three or more base portions.

Hereinafter, it is assumed that the at least one base portion 100 include one or two base portions. However, even when at least one base portion 100 is composed of three or more base portions, the following descriptions may be equally applied thereto.

For example, when the two base portions 100 shown in FIGS. 1 and 2 are defined as one group, several groups may be arranged in a transverse direction perpendicular to the longitudinal direction. In this regard, the transverse direction may mean a direction parallel to the Y-axis in FIGS. 1 and 2.

The pair of ground walls 120 respectively extend in a direction parallel to a height direction perpendicular to the at least one base portion 100 from both opposing transverse sides of each of the at least one base portion 100. In this regard, the height direction may mean a direction parallel to the Z-axis in FIGS. 1 and 2.

In one example, it may be preferable that each of the at least one base portion 100 and the pair of ground walls 120 are integrally formed with each other. In this case, the transverse thickness of each of the pair of ground walls 120 may be the same as the thickness of the at least one base portion 100 in the height direction. However, the present disclosure is not necessarily limited thereto.

The pair of pattern walls 150 are disposed to protrude from one surface of each of the at least one base portion 100 in a direction parallel to the height direction. A second circuit pattern 155 electrically connected to the first circuit pattern 105 may be formed on at least one surface of each of the pair of pattern walls 150.

For example, the pair of pattern walls 150 may extend in an elongate manner in the longitudinal direction, and may be a thin wall having the same transverse thickness as the transverse thickness of each of the pair of ground walls 120. However, the present disclosure is not necessarily limited thereto.

In addition, the second circuit patterns 155 may be formed on receptive surfaces of the pair of pattern walls 150 facing each other so as to be electrically connected to the first circuit patterns 105, and in this case, at least a portion of the second circuit patterns 155 may extend in the height direction, and at least another portion thereof may extend in the longitudinal direction.

In one example, it may be preferable that each of the at least one base portion 100 and the pair of pattern walls 150 are integrally formed with each other. In this case, the pair of ground walls 120 and the pair of pattern walls 150 may be integrally formed with each of the at least one base portion 100 using a plastic electro-plating (PEP) process.

In using the PEP process, a circuit pattern may be formed using a plastic panel without using a separate printed circuit board (PCB), and a three-dimensional structure may be injection-molded as one body. Therefore, the overall weight and unit cost of the phase shifter 10 may be lowered.

The at least one radiation element 140 is fixed to one surface of each of the at least one base portion 100 and disposed between the pair of pattern walls 150. The at least one radiation element 140 can transmit and receive radio waves and can radiate high frequency and low frequency signals.

The at least one radiation element 140 may include a plurality of radiation elements 140, and in this case, the plurality of radiation elements 140 may be arranged in the longitudinal direction so as to be spaced from each other by the same spacing while being disposed on each of the at least one base portion 100.

The pair of dielectrics 160 is configured to be movable in a direction parallel to the longitudinal direction. In this regard, at least a portion of each of the pair of dielectrics 160 is disposed between each of the pair of ground walls 120 and each of the pair of pattern walls 150.

The pair of pattern walls 150 may be formed on each base portion 100, and at least a portion of each of the pair of dielectrics 160 may be movable longitudinally while being positioned between each of the pair of ground walls 120 and each of the pair of pattern walls 150, so that a contact position of the dielectric structure with respect to the circuit pattern may be changed. Accordingly, the electrical length of the transmission line through which the electrical signals pass may be reduced or lengthened, and thus the difference between the phases of the signals may be adjusted.

In addition, since the phase may be adjusted even without using a separate movable circuit board, the overall size of the phase shifter 10 may be reduced in terms of the structure.

In one example, for efficient phase difference adjustment, the pair of pattern walls 150 may be spaced apart from each other in a direction parallel to the transverse direction, and each of the pair of pattern walls 150 may be disposed adjacent to each of the pair of ground walls 120.

In addition, each of the pair of dielectrics 160 may be configured to surround at least a portion of each of the pair of pattern walls 150. In this case, when viewed from a position on top of the phase shifter in the height direction, at least a portion of each of the pair of pattern walls 150 may be screened with each of the pair of dielectrics 160. In this regard, the pair of dielectrics 160 may be spaced apart from each of the at least one base portion 100 in a direction parallel to the height direction.

As in the related art, when the dielectric structure is disposed in parallel from the ground surface to the base surface, the area occupied by the dielectric structure increases, and the elements are affected by the dielectric structure. In addition, when the dielectric structure is formed on the pattern on the PCB, the permittivity is considerably increased, and thus a material made of a ceramic material is additionally formed, which has caused an increase in the overall unit cost and weight of the phase shifter.

In the phase shifter 10 according to an embodiment of the present disclosure, the base portion 100 and the pair of dielectrics 160 may be further spaced apart from each other, and the dielectrics 160 are not disposed on the ground wall 120, thereby solving the problem of the related art.

In one example, referring to FIG. 3, with reference to each of the pair of pattern walls 150, each of the pair of dielectrics 160 may be configured such that at least a portion of a first free end 162 at one side in the longitudinal direction thereof as a side adjacent to each of the pair of ground walls 120 is closer to the at least one base portion 100 than a second free end 164 at the other side in the longitudinal direction thereof is.

In more detail, at least a portion of the first free end 162 may be disposed at a vertical position corresponding to a vertical position at which the second circuit pattern 155 is disposed, while the second free end 164 may be disposed at a vertical position higher than that of the second circuit pattern 155 in the height direction. Accordingly, the dielectric structure may reliably contact the circuit pattern.

In addition, the at least one disengagement prevention unit 180 is fixed to one surface of each of the at least one base portion 100 and disposed between the pair of dielectrics 160. In this regard, at least a portion of the at least one disengagement prevention unit 180 is positioned on top of the pair of dielectrics 160 in the height direction to prevent disengagement of the pair of dielectrics 160 in the height direction.

The at least one disengagement prevention unit 180 may be fixed to one surface of each of the at least one base portion 100 so as not to overlap the first circuit pattern 105.

In one example, referring to FIGS. 2 and 4, the drive unit 200 is disposed on one side of the at least one base portion 100 in the longitudinal direction, and the pair of guide units 250 are spaced apart from each other in the transverse direction and are configured to reciprocate in a direction parallel to the longitudinal direction according to the driving of the drive unit 200.

In this case, each of the pair of dielectrics 160 may be connected to each of the pair of guide units 250 and may reciprocate in a direction parallel to the longitudinal direction according to the movement of the pair of guide units 250. Accordingly, at least a portion of each of the pair of dielectrics 160 may be stably movable in a direction parallel to the longitudinal direction while being positioned between each of the pair of ground walls 120 and the pair of pattern walls 150.

More specifically, the drive unit 200 may include a motor 202 configured to rotate around a motor axis extending in a direction parallel to the horizontal direction, and at least one pinion gear unit 204 configured to rotate around a central axis extending in a direction parallel to the motor axis according to the rotation of the motor 202.

In the phase shifter 10 according to an embodiment of the disclosure, as illustrated in FIGS. 2 and 4, upon receiving the driving force from one motor 202, the pair of guide units 250 are configured to move the pair of dielectrics 160. Accordingly, in order to secure the movement path of the pair of dielectrics 160, an work such as recessing the at least one base portion 100 and the pair of ground walls 120 is not required.

In FIGS. 2 and 4, the at least one pinion gear unit 204 includes two pinion gears 204 spaced apart from each other in the transverse direction. However, the number of the pinion gear unit 204 is not necessarily limited thereto, and the at least one pinion gear unit 204 may include one pinion gear 204.

In this regard, each of the pair of guide units 250 may include a rack gear unit 254 formed on a bottom portion thereof in the height direction and configured to convert a rotational motion of the at least one pinion gear unit 204 into a linear motion. Accordingly, the pair of guide units 250 may be movable in a direction parallel to the longitudinal direction according to the rotational motion of the motor 202, and accordingly, the pair of dielectrics 160 may be movable in a direction parallel to the longitudinal direction.

In addition, for stable coupling between each of the pair of guide units 250 and each of the pair of dielectrics 160, each of the pair of dielectrics 160 may include at least one coupling protrusion 165, and each of the pair of guide units 250 may include at least one coupling hole 255 formed so as to be coupled to the at least one coupling protrusion 165.

In this case, the at least one coupling protrusion 165 may be formed on an upper surface in the height direction of each of the pair of dielectrics 160, and the at least one coupling hole 255 may be formed in at least one side in the longitudinal direction of each of the pair of guide units 250.

In this regard, it is preferable that the number of at least one coupling protrusion 165 is the same as the number of at least one coupling hole 255. For example, as illustrated in FIGS. 1 and 2, the at least one coupling protrusion 165 may be composed of three coupling protrusions, and the at least one coupling hole 255 may be composed of three coupling holes. However, the numbers thereof are not necessarily limited thereto.

In one example, as shown in FIGS. 1 and 2, when the at least one base portion 100 includes a plurality of base portions 100 spaced apart from each other in the longitudinal direction, the drive unit 200 may be disposed between adjacent ones of the plurality of base portions 100. In addition, the pair of guide units 250 may extend in an elongate manner in a direction parallel to the longitudinal direction, and may be spaced apart from one surface of each of the plurality of base portions 100 in a direction parallel to the height direction so as not to affect the first circuit pattern 105.

In this case, when the phase shifter is viewed from one side in the transverse direction, at least a portion of each of the pair of guide units 250 may be screened with each of a pair of ground walls 120 included in each of the plurality of base portions 100.

Each of the pair of guide units 250 may be configured to be adjacent to each of the pair of ground walls 120 but not to interfere therewith. In this case, in order to secure movement of the pair of guide units 250 in a direction parallel to the longitudinal direction, the longitudinal extension length of each of the pair of pattern walls 150 may be smaller than the longitudinal extension length of each of the pair of ground walls 120.

In one example, each of the pair of guide units 250 is configured to guide the movement of each of the pair of dielectrics 160. Thus, it is preferable that each of the pair of guide units 250 is made of a material that has no electrical effect on the circuit pattern and the dielectric structure.

In addition, when the at least one base portion 100 includes a plurality of base portions 100 spaced apart from each other in the longitudinal direction, the phase shifter 10 according to an embodiment of the disclosure may further include an upper portion connecting unit 300 disposed between adjacent ones of the plurality of base portions 100 and configured to connect adjacent ones of the plurality of base portions 100 to each other.

For example, the upper portion connecting unit 300 may be detachably coupled to the upper surface in the height direction of each of the pair of guide units 250. When the upper portion connecting unit 300 is mounted on the upper surface in the height direction of each of the pair of guide units 250, the plurality of base portions 100 may constitute one phase shifter group. In this case, the movement and replacement of the components of the phase shifter 10 may be more easily performed.

In one example, when the plurality of base portions 100 constitute one group, it is obvious that several phase shifter groups may be arranged side by side in each of the longitudinal direction and the transverse direction.

For example, referring to FIGS. 3 and 4, it may be identified that an additional phase shifter 10 may be disposed on each of both opposing sides in the transverse direction of the shown phase shifter 10.

Referring to an example in which the phase shifters 10 are arranged in the positive Y-axis direction, the illustrated base portion 100 may be positioned so as to be shifted in the negative Y-axis direction around a center of the pinion gear unit 204, and thus, another base portion 100 may be positioned so as to be shifted in in the positive Y-axis direction around a center of the pinion gear unit 204. In this case, the number of the pinion gear unit 204 may be increased and the position of the motor 202 may be further shifted in the positive Y-axis direction.

In one example, when several phase shifter groups are added so as to be arranged in the longitudinal direction, the drive unit 200, the pair of guide units 250, and the upper portion connecting unit 300 may be added so as to be disposed on one side or each of both opposing sides in the longitudinal direction of each of the two base portions 100 shown in FIGS. 1 and 2.

The spirit of the present embodiment is illustratively described hereinabove. It will be appreciated by those skilled in the art to which the present embodiment pertains that various modifications and alterations may be made without departing from the essential characteristics of the present embodiment. Accordingly, the present embodiments are not to limit the spirit of the present embodiment, but are to describe the spirit of the present embodiment. The technical idea of the present embodiment is not limited to these embodiments. The scope of the present embodiment should be interpreted by the following claims, and it should be interpreted that all the spirits equivalent to the following claims fall within the scope of the present embodiment.

[DESCRIPTION OF REFERENCE NUMERALS] 10: phase shifter, 100: base portion, 105: first circuit pattern, 120: pair of ground walls, 140: radiation element, 150: pair of pattern walls, 155: second circuit pattern, 160: pair of dielectrics, 162: first free end, 164: second free end, 165: coupling protrusion, 180: disengagement prevention portion, 200: drive unit, 202: motor, 204: pinion gear unit, 250: pair of guide units, 254: rack gear unit, 255: coupling hole, 300: upper portion connecting unit

### [CROSS-REFERENCE TO RELATED APPLICATION]

This application claims the benefit of and priority to Korea Patent Application No. 10-2023-0055220, filed on April 27, 2023, the entire disclosures of which are hereby incorporated herein by reference in its entirety.

## Claims

1. A phase shifter comprising:
at least one base portion extending in a longitudinal direction and configured such that a first circuit pattern is formed on one surface thereof;
a pair of ground walls respectively extending from both opposing transverse sides of each of the at least one base portion in a direction parallel to a height direction perpendicular to the at least one base portion;
a pair of pattern walls disposed to protrude from one surface of each of the at least one base portion in a direction parallel to the height direction, wherein a second circuit pattern electrically connected to the first circuit pattern is formed on at least one surface of each of the pair of pattern walls; and
a pair of dielectrics configured to be movable in a direction parallel to the longitudinal direction, wherein at least a portion of each of the pair of dielectrics is disposed between each of the pair of ground walls and each of the pair of pattern walls.

2. The phase shifter of claim 1, wherein the pair of pattern walls are spaced apart from each other in a direction parallel to the transverse direction,
wherein each of the pair of pattern walls is disposed adjacent to each of the pair of ground walls.

3. The phase shifter of claim 1, wherein the pair of dielectrics are spaced apart from each of the at least one base portion in a direction parallel to the height direction,
wherein each of the pair of dielectrics is configured to surround at least a portion of each of the pair of pattern walls.

4. The phase shifter of claim 3, wherein based on each of the pair of pattern walls, each of the pair of dielectrics is configured such that at least a portion of a first free end thereof at one side in the longitudinal direction adjacent to each of the pair of ground walls is closer to the at least one base than a second free end thereof at the other side in the longitudinal direction is.

5. The phase shifter of claim 4, wherein the at least a portion of the first free end is positioned at a vertical position corresponding to a vertical position at which the second circuit pattern is positioned,
wherein the second free end is positioned at a vertical position higher than the vertical position of the second circuit pattern in the height direction.

6. The phase shifter of claim 1, wherein the pair of ground walls and the pair of pattern walls are integrally formed with each of the at least one base portion in a plastic electro-plating (PEP) process.

7. The phase shifter of claim 1, further comprising:
a drive unit is disposed on one side in the longitudinal direction of the at least one base portion; and
a pair of guide units spaced apart from each other in the transverse direction and configured to reciprocate in a direction parallel to the longitudinal direction according to driving of the drive unit,
wherein the pair of dielectrics are connected to the pair of guide units, respectively, and are configured to reciprocate in a direction parallel to the longitudinal direction according to movement of the pair of guide units.

8. The phase shifter of claim 7, wherein the drive unit includes:
a motor configured to rotate about a motor axis extending in a direction parallel to the transverse direction; and
at least one pinion gear unit configured to rotate about a central axis thereof extending in a direction parallel to the motor axis according to rotation of the motor,
wherein each of the pair of guide units includes a rack gear unit formed on a bottom in the height direction thereof, wherein the rack gear unit converts a rotational motion of the at least one pinion gear unit into a linear motion.

9. The phase shifter of claim 7, wherein each of the pair of dielectrics includes at least one coupling protrusion formed on an upper surface in the height direction thereof,
wherein each of the pair of guide units includes at least one coupling hole formed in one side in the longitudinal direction thereof, wherein the at least one coupling hole is coupled to the at least one coupling protrusion.

10. The phase shifter of claim 7, wherein the at least one base portion includes a plurality of base portions spaced apart from each other in the longitudinal direction,
wherein the drive unit is disposed between adjacent ones of the plurality of base portions,
wherein the pair of guide units extend in an elongate manner in a direction parallel to the longitudinal direction, and are spaced apart from one surface of each of the plurality of base portions in a direction parallel to the height direction.

11. The phase shifter of claim 10, further comprising an upper portion connecting unit detachably coupled to an upper surface in the height direction of each of the pair of guide units and configured to connect adjacent ones of the plurality of base portions to each other.

12. The phase shifter of claim 1, further comprising at least one disengagement prevention unit fixed to one surface of each of the at least one base portion and disposed between the pair of dielectrics,
wherein at least a portion of each of the at least one disengagement preventing portion is positioned at a higher position than a position in the height direction of each of the pair of dielectrics to prevent disengagement in the height direction of the pair of dielectrics.

13. The phase shifter of claim 1, further comprising at least one radiation element fixed to one surface of each of the at least one base portion and disposed between the pair of pattern walls.
